# EUROPÄISCHE PATENTSCHRIFT

(11) **EP 2 027 902 B1**
(45) Veröffentlichungstag und Bekanntmachung des Hinweises auf die Patenterteilung: **26.03.2014**
(21) Anmeldenummer: 07114798.7
(22) Anmeldetag: 22.08.2007
(51) Int. Cl.: B01D 21/00, E03F 5/14, E03F 5/16, B01D 21/06, B01D 21/24

(54) **Sedimentationsbecken für Kläranlagen**
Sedimentation tank for sewage treatment plants
Bassin de sédimentation pour stations d'épuration

(43) Veröffentlichungstag der Anmeldung: 25.02.2009
(73) Patentinhaber: Schlederer, Swantje Mignon, 85567 Grafing (DE)
(72) Erfinder: Schlederer, Swantje Mignon, 85567 Grafing (DE)
(74) Vertreter: Leske, Thomas

(56) Entgegenhaltungen:
- DE-A1- 2 551 623
- DE-A1- 3 520 217
- DE-C- 550 849
- FR-A- 1 098 155
- US-A- 3 618 778
- US-A- 3 666 112
- US-A- 3 837 501
- US-A- 3 957 656
- US-A- 4 133 771

## Beschreibung

Die Erfindung betrifft ein Sedimentationsbecken für eine Kläranlage zur Reinigung von Abwasser, das von einer Kanalisation gesammelt und zu ihr geleitet wurde.

Zur Entfernung von unerwünschten Bestandteilen der Abwässer werden mechanische (auch physikalische genannt), biologische und chemische Verfahren eingesetzt. Moderne Kläranlagen sind dementsprechend dreistufig, wobei in jeder Reinigungsstufe eine Verfahrensart im Vordergrund steht.

Das von der Kanalisation herangeführte, rohe Abwasser besteht aus einem Gemisch von verschiedenen Beimengungen organischer und nichtorganischer Art, die jeweils löslich oder nichtlöslich sein können und die von dem den Hauptbestandteil bildenden Wasser mitgeführt werden. Besonders bei starkem Regeneinfall, der eine große Schmutzwassermenge bewirkt, führt das Abwasser erhebliche Mengen von gröberen, absetzbaren Verunreinigungen mit sich, wie beispielsweise Sand, Steine oder Glassplitter sowie verschiedenartige organische Substanzen. Diese Stoffe würden zu betrieblichen Störungen (Verschleiß, Verstopfung) in der Kläranlage führen und müssen deshalb vorab aus dem zu klärenden Abwasserstrom entfernt werden.

Zu diesem Zweck ist im Zulaufbereich der Kläranlage, neben einem Auffangbecken zur Aufnahme des von der Kanalisation herangeführten rohen Abwassers, ein erstes Absetzbecken für die groben und - wegen ihrer gegenüber Wasser größeren Dichte - absetzbaren Beimengungen vorgesehen. Derartige Sedimentationsbecken sind auch unter der Bezeichnung "Sandfang" bekannt. Sie sind in verschiedenen baulichen Varianten im Einsatz, etwa als

Langsandfang, beschrieben in der DE 41 21 392 A1, belüfteter Sandfang, bei dem auch Öle und Fette an der Oberfläche abscheidbar sind, wie in der DE 35 29 760 C2 gezeigt ist, oder als Rundsandfang, etwa gemäß der DE 100 12 379 A1.

Eine Belüftung des Sandfangs, bevorzugt vom Boden des Absetzbeckens aus, erzeugt eine Wirbelströmung und führt zu einer Verringerung der Dichte des Abwassers. Auf Grund beider Effekte setzen sich die schweren, mineralischen Anteile (vorwiegend Sand) am Beckenboden ab. Ein derartiger Sandfang ist beispielsweise in der DE 198 30 082 C1 beschrieben. Beim Tiefsandfang strömt das Abwasser von oben in das Becken. Wegen dessen Tiefe besitzt das Abwasser eine relativ lange Verweildauer, wodurch sich der schwere Sand am Beckengrund absetzen kann. Der Beckengrund ist meistens als Sandtrichter ausgebildet. Bei modernen Anlagen wird das Sandfanggut nach der Entnahme aus dem Sandfang gewaschen, um es von etwa vorhandenen organischen Beimengungen zu befreien, wie in der DE296 23 203 U1 gezeigt ist. Diese Maßnahme ermöglicht eine bessere Verwertbarkeit und die anschließende Verwendung, etwa im Straßenbau.

Die Sandabscheidung erfolgt, je nach Sandfangtyp, mittels Schwerkraft, wie bei dem in der DE 41 21 392 A1 gezeigten Langsandfang, oder mittels Zentrifugalkraft, etwa in einem Rundsandfang nach der DE 85 23 894 U1 oder einem Vortex-Sandfang, gemäß der DE 198 30 082 C1 oder der DE 100 12 379. Für die Längsräumung des Bodens des Absetzbeckens werden häufig Räumschilder oder Schneckenförderer eingesetzt. Die Feststoffentnahme geschieht im weiteren Verlauf mittels Pumpe und Sandklassierer, die auch in Form einer Sandklassierschnecke baulich vereint sein können.

Aus der DE 41 21 392 A1 ist ein als Langsandfang ausgebildetes Sedimentationsbecken für Kläranlagen bekannt, bei dem in einem dem Auslauf des Beckens benachbarten Bereich mehrere vertikal angeordnete ebene Bleche parallel zur Strömungsrichtung orientiert sind. Diese Einbauten sind in einem Bereich vorgesehen, in dem der Sand bereits abgesetzt ist, und sollen die Reibung erhöhen, um dadurch die Strömung zu verlangsamen. Diese Maßnahme dient jedoch lediglich dazu, den Wasserstand über die Länge der Ablaufrinne etwa konstant zu halten.

Die US 4 133 771 beschreibt eine Vorrichtung zur Sedimentation von suspendierten Partikeln in Flüssigkeiten, wobei die Partikel durch Partikelwachstum von der Flüssigkeit separiert werden können. Dabei wir der Flüssigkeitsstrom, der die Partikel aufweist, durch Strömungsleitwände horizontal mäanderförmig durch ein Becken geleitet. Dabei soll die Verweilzeit in den einzelnen vertikalen Strömungsabschnitten des Mäanders solange sein, dass das Partikelwachstum als Konsequenz unterschiedlicher Geschwindigkeit in der Flüssigkeitsströmung gefördert wird, sodass die gewünschte Separation der Partikel von der Flüssigkeit in einer nachfolgenden Stufe erfolgen kann. Die Sedimentation der nachfolgenden Stufe entspricht der aus dem Stand der Technik allgemein bekannten vertikalen Sedimentation.

Aus der DE 36 41 365 C2 ist es bekannt, eine Strömung durch flächige Einbauten, hier als Elektrodenbleche ausgebildet, in einem mäanderförmigen Verlauf zu führen, um dadurch eine längere Einwirkzeit eines elektrischen Feldes zur Flotation von Schmutzpartikeln in Abwasser zu erzielen. Zugleich wird auch im Abwasser mitgeführter Sand abgeschieden. Die von den Einbauten gebildeten Mäander verlaufen in senkrechter Richtung und haben keinen Einfluss auf die Ablagerung des Sandes. Die DE 297 12 469 U1 beschreibt eine Vorrichtung zum Abtrennen körniger Stoffe aus einer Flüssigkeit, insbesondere einem mit Spänen angereicherten Kühlmittel, in der Metall verarbeitenden Industrie. Auch bei dieser Vorrichtung wird der Flüssigkeitsstrom durch Leitbleche in Zick-Zack Art abwechselnd von unten nach oben umgekehrt, wobei sich die schweren Partikel an Boden ablagern und mittels eines Kratzerschiebers entfernt werden können.

Die Sedimentationsgeschwindigkeit von körnigem Material wie Sand oder Steine hängt in komplizierter Weise vom jeweiligen Radius der Materialpartikel ab. Bei kleinem Radius ist die Sedimentationsgeschwindigkeit gering und ändert sich mit dem Quadrat des Partikelradius. Bei größeren Partikeln ist die Sedimentationsgeschwindigkeit hoch und proportional zur Wurzel des Partikelradius. Das Abwasser führt im Allgemeinen absetzbare Materialien mit einer großen Bandbreite von Körnungen heran, die in dem Sedimentationsbecken möglichst vollständig abgetrennt werden sollen. Wegen der verschiedenen Sinkgeschwindigkeiten für die einzelnen Körnungen ergibt sich hieraus die Forderung, eine hinreichend lange Verweilzeit des Abwassers im Sedimentationsbecken sicherzustellen. Da die Verweilzeit von der Strömungsgeschwindigkeit des Abwassers und der Länge des Beckens abhängt, ist für eine ausreichende Sedimentation auch kleinerer Körnungen eine relativ große Länge des Sedimentationsbeckens erforderlich, wie es die DE 41 21 393 A1 beispielhaft zeigt. Der hierfür erforderliche Platzbedarf und der Aufwand für die Materialien zum Bau eines solchen Sedimentationsbeckens können problematisch sein.

Ausgehend von einem Stand der Technik, wie er in der DE 41 21 392 A1 beschrieben ist, ist es Aufgabe der Erfindung, ein effizienter arbeitendes Sedimentationsbecken für Sand, Steine und andere von Abwasser mitgeführte absetzbare Stoffe vorzuschlagen, das bei hohen Abwasserdurchsatz einen verringerten Platzbedarf hat.

Diese Aufgabe wird durch ein Sedimentationsbecken für Kläranlagen gelöst, das die im Anspruch 1 angegebenen Merkmale aufweist. Weitere Ausgestaltungen der Erfindung sind in den abhängigen Ansprüchen aufgeführt.

Der Erfindung liegt die Erkenntnis zu Grunde, dass einerseits eine langsame Strömung des Abwassers günstig für die Sedimentation von mitgeführten spezifisch schwereren Stoffen und dass andererseits erzwungene Richtungsänderungen der Strömung, die zu abwechselnden Wirbel- und Stagnationszonen führen, diesen Vorgang fördern können.

Derartige Richtungsänderungen treten bei naturbelassenen Fließgewässern, die Geschiebe wie Sand, Kies und Steine mit sich führen, im Bereich geringen Gefälles und damit geringer Fließgeschwindigkeit auf. Solche Flussformen werden nach einem Fluss in Kleinasien als "Mäander" bezeichnet. Sie bilden sich im Allgemeinen im Unterlauf des Gewässers. Die Ursache der Mäanderbildung liegt in der Trägheit des Wassers, die dazu führt, dass das kurvenäußere Ufer, Prallhang genannt, stärker erodiert als das Kurveninnere, der Gleithang. Einmal bestehende Kurven werden hierdurch immer mehr verstärkt. Ist der Stromstrich erst einmal aus der Flussmitte zu einem Ufer hin abgelenkt, so bildet sich dort ein Prallhang, der durch die Seitenerosion fortlaufend zurückweicht. Ihm gegenüber entsteht der Gleithang, von dem der Fluss weg gleitet und dort Sedimente ablagert. Durch die Mäandrierung des Flusslaufes wird die Fließgeschwindigkeit herabgesetzt, was insgesamt die Sedimentation fördert.

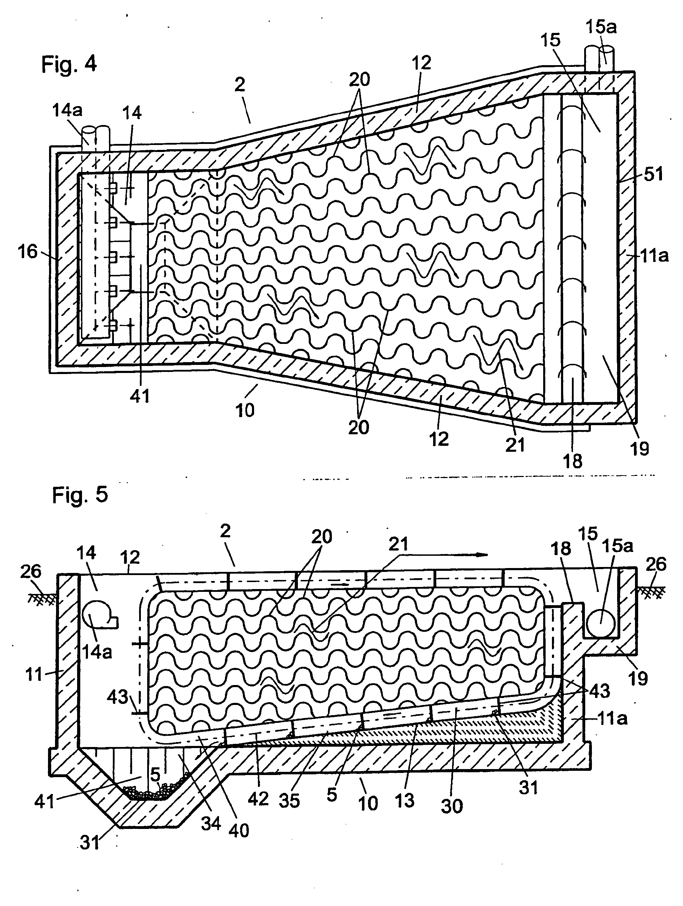

Nach der Erfindung werden in das Sedimentationsbecken Einbauten eingebracht, die als strukturierte Strömungsleitwände für das zu reinigende Fluid (Abwasser) ausgebildet sind. Unter Strukturierung ist hierbei zu verstehen, dass die Strömungsleitwände, anders als beim Stand der Technik nach der DE 41 21 392 A1, nicht als ebene Bleche ausgebildet sind, sondern bevorzugt eine wellige oder mäandrierend geschwungene Form aufweisen. Im Folgenden werden die Begriffe "Welle" und "Mäander" im Wesentlichen synonym verwendet, d.h. dass unter dem Ausdruck "Welle und/oder Mäander" allgemein eine Oberfläche mit abwechselnden Erhebungen und Vertiefungen verstanden werden soll, wie sie in einfacher schematischer Form in **Fig. 4** dargestellt ist. Es wird also kein Unterschied zwischen diesen beiden Begriffen gemacht. Die einzelnen Wellen und/oder Mäander, von denen die Strömungsleitwände erfindungsgemäß eine Vielzahl aufweisen sollen, müssen auch nicht untereinander gleich sein. Sie können sich beispielsweise in ihrem Abstand voneinander, in ihrer Höhe (Amplitude), in ihrer Krümmung oder dem Winkelbereich der durch sie bewirkten Richtungsänderung der Strömung unterscheiden.

Durch die Ausbildung der Strömungsleitwände in Form von einer Vielzahl von Wellen oder Mäandern reduziert sich die Fließgeschwindigkeit des zu klärenden Abwassers, und es entstehen Stagnationszonen und Wirbel. Die Sedimente können sich dadurch schneller und auf kürzerer Strecke absetzen. Zudem lagern sich die Sedimente bevorzugt auf der in Strömungsrichtung gesehen hinteren Seite der Wellen oder Mäander ab. Dieser Vorgang wird dadurch unterstützt, dass der Boden des Beckens zum Ablaufbereich hin ansteigend ausgebildet wird, wodurch die für eine Ablagerung des Sediments zu durchlaufende vertikale Strecke zunehmend verringert wird. Durch diese Effekte können Sedimentationsbecken in ihrer Bauweise wesentlich kleiner ausfallen, da der Wirkungsgrad der Sedimentation steigt. Um die Fließgeschwindigkeit noch weiter herabzusetzen, können weitere unterschiedliche Oberflächengestaltungen der Strömungsleitwände eingesetzt werden. So können die Strömungsleitwände zusätzlich zu der generellen geschwungenen Formgebung noch eine weitere feinere Strukturierung aufweisen, beispielsweise in Form von Noppen oder Dellen oder von sonstigen aus der Oberfläche hervorragenden Elementen. Hierfür sind insbesondere der Strömung entgegen gerichtete Strukturen nach Art einer "Haifischhaut" zu verwenden. Derartige feinere Strukturierungen lassen sich beispielsweise durch Prägung mit Matrizen, durch chemisch aufgebrachte Beschichtungen oder mittels thermischer Verfahren wie Löten, Schweißen oder Flammspritzen aufbringen.

Die Strömungsleitwände sind bevorzugt zu mehreren im Wesentlichen in der Hauptströmungsrichtung, d. h. der Richtung, die durch den geraden Weg zwischen Einlaufbereich und Ablaufbereich definiert ist, im Becken angeordnet. Durch die abgestimmte Anordnung werden zwischen benachbarten Strömungsleitwänden Strömungskanäle gebildet Die Strömungskanäle, und damit die Abwasserströmung, verlaufen mäandrierend mit abwechselnden Richtungsänderungen, was zur Ausbildung von Strömungsbereichen führt, die den Verhältnissen von Prallhang und Gleithang entsprechen. Im Bereich des Gleithangs ist die Fließgeschwindigkeit deutlich verlangsamt, was zu einer besonders effektiven Sedimentation führt.

Der Abstand der einzelnen Wellen oder Mäander voneinander, d.h. die Wellenlänge, kann im Rahmen der Erfindung in verschiedener Weise festgelegt werden. Er kann beispielsweise sowohl in horizontaler als auch in vertikaler Richtung konstant sein. Er kann jedoch auch in Bezug auf eine oder beide dieser Richtungen variabel sein, etwa derart, dass die Wellenlänge in der Hauptströmungsrichtung, d.h. der horizontalen Richtung, zu- oder abnimmt. Desgleichen ist denkbar, dass die Wellenlänge nach unten hin (zum Beckenboden) größer wird. Selbstverständlich kann auch die Amplitude der Wellen oder Mäander, d.h. der Abstand der Kämme von einer gedachten Mittellinie der Strömungsleitwände, entsprechend variabel dimensioniert werden.

Die erfindungsgemäße Bauform für Langbecken sind trapezförmige Becken, bei denen die Breite des Beckens in der Hauptströmungsrichtung kontinuierlich zunimmt. Der Einlaufbereich liegt hierbei auf der Schmalseite, während der Auslaufbereich auf der gegenüber liegenden Breitseite angeordnet ist. Durch diese Formgebung des Beckens wird die Strömungsgeschwindigkeit des Abwassers in der Hauptströmungsrichtung noch weiter verlangsamt, da der durchströmte Querschnitt immer größer wird. Die erzielte Reduzierung der Durchlaufgeschwindigkeit durch Verbreiterung der Strömungsbahnen ist günstig für die Sedimentation, da hierdurch auch feinere Sandkörner mit geringer Sedimentationsgeschwindigkeit Gelegenheit haben, sich abzusetzen.

Durch die trapezförmige Gestaltung des Beckens kann auch der Einfluss eines in der Längsrichtung des Beckens ansteigenden Bodens kompensiert werden. Diese bauliche Variante ist für die Sedimentation feinerer Sandkörner förderlich, da hierdurch der vertikale Abstand zunehmend verringert wird, der von den abzusetzenden Sandkörnern zu durchlaufen ist, bis sie den Boden des Beckens erreichen.

Die Strömungsleitwände nach der Erfindung erstrecken sich bevorzugt über die gesamte Länge des Sedimentationsbecken, mit Ausnahme des Einlaufbereichs, der für die Entnahme des gesammelten Sediments aus dem Schlammsammelraum von oben her frei zugänglich sein sollte. Sie reichen bevorzugt zumindest von der Oberkante des Beckens bis annähernd zu dessen Boden, wobei sie in konstantem Abstand der Kontur des Bodens folgen. Der freie Raum dient nach der Erfindung für die Installation von Reinigungsvorrichtungen wie beispielsweise Räumschilder, Schieber oder Kratzer, mit denen das am Boden abgelagerte Sediment einem Schlamm- bzw. Sandsammelraum zugeführt werden kann. Der Schlamm- bzw. Sandsammelraum bildet üblicherweise den tiefsten Bereich des Beckens. Er kann mit einer Ableitung, die in einer Öffnung am Beckenboden mündet, versehen sein. Die Ableitung dient dem Sand-Schlammabzug, der beispielsweise mittels einer Förderschnecke erfolgt. Bei Rundbecken werden die Räumschilder bevorzugt gegenüber der radialen Richtung versetzt angeordnet und rotierend angetrieben. Bei rechteckigen Langbecken sind in Längsrichtung des Beckens verfahrbare Räumschilder geboten.

In einer bevorzugten Ausführungsform sind die Strömungsleitwände einzeln oder gemeinsam in vertikaler Richtung verfahrbar. Zu diesem Zweck sind für die Strömungsleitwände Tragevorrichtungen vorgesehen, die das Sedimentationsbecken in geeigneter Weise überspannen. Sie erlauben es, über manuelle oder motorische Antriebe die Strömungsleitwände auf und ab zu bewegen, etwa um den Abstand zum Boden des Sedimentationsbecken einstellen zu können. Dabei ist es vorteilhaft, den Verstellweg so groß zu gestalten, dass die Unterkanten der Strömungsleitwände zumindest über den oberen Rand des Sedimentationsbeckens gelangen können. Hierdurch wird das Becken bei Bedarf frei zugänglich. Zudem wird es auf diese Weise möglich, die Strömungsleitwände zur Inspektion oder Reinigung zu erreichen, ohne das Sedimentationsbecken entleeren zu müssen. Eine Störung des Betriebs kann dadurch vermieden werden, insbesondere wenn die Wartung in eine Phase geringen Abwasseranfalls gelegt wird.

Als Material für die Strömungsleitwände ist bevorzugt Stahl vorgesehen, da dieser die für den rauen Betrieb im Eingangsbereich der Kläranlage erforderliche mechanische Stabilität und Widerstandsfähigkeit besitzt und problemlos in die gewünschte Form gebracht werden kann. Alternativ hierzu können auch glasfaserverstärkte Kunststoffe Verwendung finden oder teildurchlässige Kunststoffmembranen, beispielsweise in Form von grobporigen, versteiften Vliesen. Letztere bewirken durch eine Art von Filterung eine weitere Erhöhung der Sedimentation.

Zur Erhöhung der Verschleißfestigkeit oder zum Rostschutz kann das verwendete Material auch beschichtet sein. Bei fest eingebauten Strömungsleitwänden oder bei entsprechender Gestaltung der Seitenwände des Sedimentationsbeckens können diese auch aus Beton erstellt werden, der bevorzugt als armierter Beton oder Faserbeton eingesetzt wird.

Die bevorzugte Bauformen sind trapezförmige Langbecken, bei denen der Einlauf- und Ablaufbereich jeweils an den (kürzeren) Stirnseiten angeordnet sind.

Beim Betrieb eines Sedimentationsbeckens nach der Erfindung ist es möglich, die Sedimentation durch weitere Maßnahmen zu fördern. Hierzu gehört eine elektrische, thermische oder chemische Beeinflussung der Sedimentation, die durch geeignete Konstruktion oder Beaufschlagung der Strömungsleitwände erzielbar ist. So können die Strömungsleitwände im Rahmen der Erfindung mit elektrostatischen Aufladungen versehen werden. Sie können auf unterschiedliche Temperaturen gebracht werden, oder sie können chemisch beschichtet sein.

Zur Unterstützung der Sedimentation oder zur Spülung des Sedimentationsbeckens und der Strömungsleitwände ist es vorteilhaft, im Rahmen der Erfindung Öffnungen und/oder Zuleitungen im Bereich des Bodens des Sedimentationsbeckens vorzusehen, über die Gase, z.B. Pressluft oder Flüssigkeiten, in das Becken einleitbar sind.

Im Folgenden wird die Erfindung anhand der Figuren näher beschrieben. Es zeigen:
**Fig. 1**: Schematische Darstellung einer Kläranlage mit Sedimentationsbecken,
Fig. 2: schematische Seitenansicht eines Sedimentationsbeckens gemäß der Erfindung im Querschnitt,
Fig. 3 perspektivische Ansicht einer erfindungsgemäßen Trennwand/Strömungsleitwand,
Fig. 4: schematische Draufsicht auf ein trapezförmiges Becken nach der Erfindung.
Fig. 5: einen schematischen Längsschnitt durch ein trapezförmiges Becken nach einer weiteren Variante der Erfindung.
Fig. 6: einen schematischen Querschnitt durch ein trapezförmiges Becken nach Figur 2.
Fig. 7: einen schematischen Querschnitt durch ein trapezförmiges Becken nach einer weiteren Ausführungsform der Erfindung.

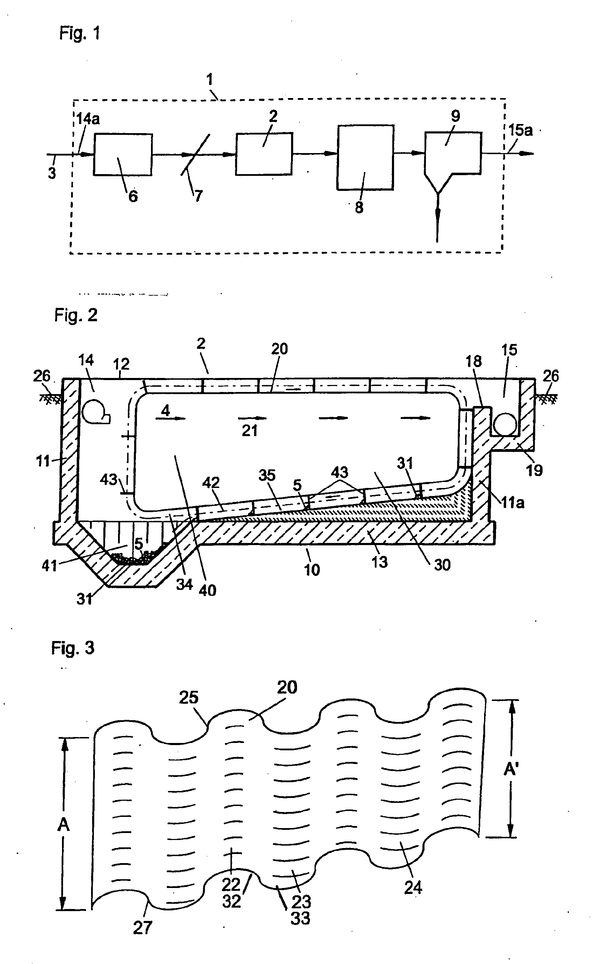

Die **Fig. 1** zeigt in schematischer Darstellung eine kommunale Kläranlage 1, die zur Reinigung von Abwasser 3 dient, das von der Kanalisation gesammelt und zu ihr transportiert wurde. Ein Zulauf 14a führt zunächst in ein Auffangbecken 6 und von dort über einen Rechen 7 zur Aussonderung von grobem, schwimmfähigem Material zu einem Sedimentationsbecken 2. Dieses Becken 2, 10 hat die Aufgabe, grobe absetzbare Stoffe aus dem Abwasser zu entfernen, so beispielsweise Sand. Das von diesen Stoffen befreite rohe Abwasser tritt in ein Belebungsbecken 8 ein, wo durch Einwirkung von Mikroorganismen ein Abbau von organischen und anorganischen Verbindungen erfolgt. In dem Nachklärbecken 9 werden Schwebstoffe und andere absetzbare Verunreinigungen als Klärschlamm abgeschieden, bevor das nunmehr gereinigte Wasser über einen Ablauf 15a in einen hier nicht gezeigten Vorfluter strömt, üblicherweise ein fließendes Gewässer.

Die **Fig. 2** zeigt in schematischer Darstellung ein Sedimentationsbecken 2 für Sand nach der Erfindung in einer Seitenansicht. Dieses Becken 10 ist als Langfangbecken ausgebildet und ist üblicherweise in der Erdoberfläche 26 eingelassen. Das Becken 10 weist an einer Stirnwand 11 einen Einlaufbereich 14 für das vom Rechen 7 (s. **Fig. 1**) kommende Abwasser 3 auf. Das Abwasser 3 kann hier generell als Fluid 4 mit Beimengungen 5, wie z.B. schwimmfähige und absetzbare, nicht-schwimmfähige Stoffe, gesehen werden. Es fließt vom Boden 13 und den Seitenwänden 12 des Beckens 10 begrenzt in der Hauptströmungsrichtung 21 zu der dem Einlaufbereich 14 gegenüberliegenden Stirnwand 11a des Beckens 10, wo es über einen Überlauf 18 in eine Ablaufrinne 19 und von dort weiter in ein hier nicht gezeigtes Belebungsbecken 8 (s. **Fig. 1**) strömt.

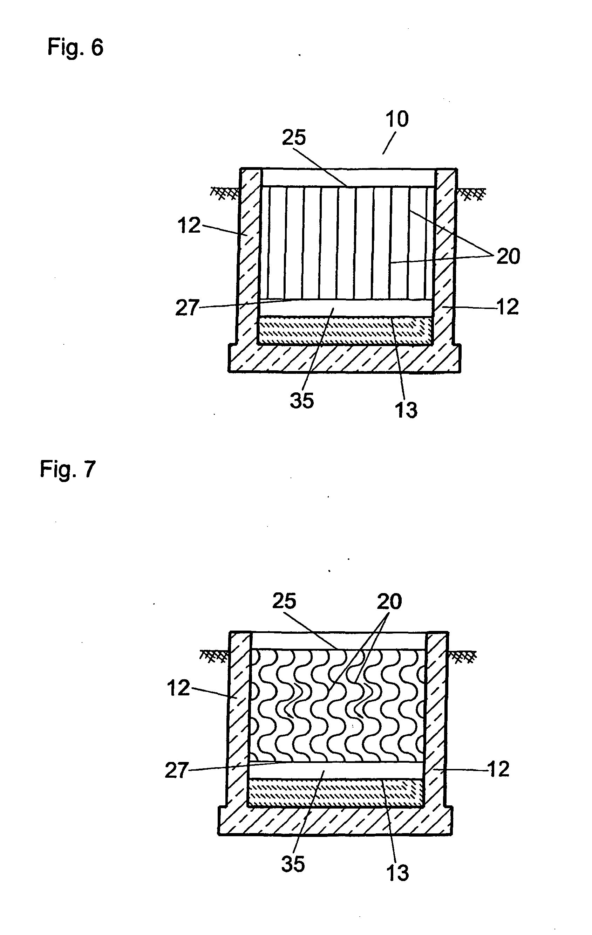

Nach der Erfindung sind im Becken 10 mehrere Einbauten als Strömungsleitwände 20 angeordnet, die im Wesentlichen entlang der Hauptströmungsrichtung 21 verlaufen. Diese Strömungsleitwände 20 weisen eine Strukturierung auf, die generell als Welle 22 oder Mäander 23 ausgebildet ist. Die Kämme 24 der einzelnen Wellen 22 oder Mäander 23, d. h. die von der Oberfläche am weitesten hervorstehenden Bereiche der Strömungsleitwände 20, können hierbei senkrecht zur Erdoberfläche 26 (s. **Fig. 3-5** und **7**) oder parallel hierzu (s. **Fig. 6** und **7**) orientiert sein. Die Strömungsleitwände 20 erstrecken sich in Längsrichtung des Beckens 10, d. h. in der Hauptströmungsrichtung 21, vom Einlaufbereich 14 bis zum Ablaufbereich 15 und definieren damit den Absetzbereich 30 des Beckens 10. In vertikaler Richtung reichen die Oberkanten 25 der Strömungsleitwände 20 von einer Position oberhalb des Soll-Abwasserspiegels im Becken 10 bis zu einer Position der Unterkanten 27, die annähernd bis zum Boden 13 des Beckens 10 reicht. Wenn der Boden 13 des Beckens 10 im Absetzbereich erhöht ist, wie in **Fig. 2** dargestellt, folgt die Unterkante 27 der Strömungsleitwände 20 der Kontur des Bodens 13. Zwischen der Unterkante 27 der Strömungsleitwände 20 und dem Boden 13 des Beckens 10 ist eine Reinigungsvorrichtung 42 vorgesehen, mittels welcher das auf dem Boden 13 des Absetzbereichs 30 befindliche Sediment 31 in einen als Schlammsammelraum 41 ausgebildeten Teilbereich 40 des Beckens 10 befördert werden kann. Die Reinigungsvorrichtung 42 ist bspw. als Anordnung von Räumschildern 43 gestaltet, die im Reinigungsbereich 35 des Beckens 10 verfahrbar installiert sind. Im Boden 13 oder den Stirn- oder Seitenwänden 11, bzw. 12 des Beckens 10 können hier nicht gezeigte Öffnungen von Zuleitungen vorhanden sein, über die Gase oder Flüssigkeiten in das Becken 10 einleitbar sind.

Die **Fig. 4** zeigt in schematischer Darstellung ein Sedimentationsbecken 2 nach der Erfindung in Draufsicht. Es handelt sich wie bei dem Sedimentationsbecken 2 nach **Fig. 2** um ein Langfangbecken. Die Hauptströmungsrichtung 21 verläuft von der eine Schmalseite bildenden einlaufseitigen Stirnwand 11 des Beckens 10 zur gegenüberliegenden Stirnwand 11 a. Die senkrecht angeordneten Strömungsleitwände 20 sind in Draufsicht zu sehen, so dass die Wellen 22 oder Mäander 23, deren Kämme 24 ebenfalls senkrecht verlaufen, deutlich zu erkennen sind. Die Anordnung der Strömungsleitwände 20 ist derart, dass die Wellen 22 oder Mäander 23 im Wesentlichen parallel zu denjenigen der jeweils benachbarten Strömungsleitwand 20 verlaufen. Hierdurch wird erreicht, dass das zwischen zwei Strömungsleitwänden 20 geführte Abwasser zwar einen mäandrierenden, aber annähernd gleich großen Querschnitt durchströmt. Der Abstand der Kämme 24 der Wellen 22 oder Mäander 23 kann in Bezug auf die Längserstreckung der Strömungsleitwände 20 gleichmäßig oder ungleichmäßig sein. Wie in **Fig. 3** zu sehen ist, können auch die Seitenwände 12 des Beckens 10 mit Strukturen versehen sein, die bevorzugt an die Formgebung der Strömungsleitwände 20 angepasst sind.

In **Fig. 3** ist eine Strömungsleitwand 20 in schematischer perspektivischer Ansicht gezeigt. Die Wellen 22 oder Mäander 23 - und damit auch ihre Kämme 24 - verlaufen hier in senkrechter Richtung in Bezug auf die nicht dargestellte Erdoberfläche 26. Dabei bildet jeweils das Wellental den Prallhang 32 und der Wellenkamm den Gleithang 33. Hierbei ist hervorzuheben, dass ein Wellenkamm auf einer Seite einer Strömungsleitwand 20 auf der anderen Seite als Wellental in Erscheinung tritt.

Je nach dem Verlauf des Bodens 13 des Beckens 10 kann der Abstand zwischen der Oberkante 25 und der Unterkante 27 der Strömungsleitwände 20 konstant sein oder sich in Längsrichtung ändern. Hierbei ist der besagte Abstand in der Nähe des Ablaufbereichs 15 des Beckens10 am kleinsten mit dem Wert A'. Die Strömungsleitwände 20 weisen hier nicht gezeigte Haltevorrichtungen auf, mittels derer sie im Becken aufgehängt und gehalten werden. Bevorzugt sind die Haltevorrichtungen an Verstelleinrichtungen montiert, die es erlauben, die Eintauchtiefe der Strömungsleitwände 20 im Becken 10 zu verändern.

Die Anordnung der Strömungsleitwände 20 im Becken 10 kann auch mit Strömungsleitwänden 20 erfolgen, die alle dieselbe Länge aufweisen, wie in **Fig. 4** gezeigt ist. Hier wird die Erweiterung der Strömungsquerschnitte zwischen benachbarten Strömungsleitwänden 20 dargestellt, die durch die im Wesentlichen radiale Ausrichtung der Strömungsleitwände 20 bedingt ist. Die Verbreiterung des Strömungsquerschnitts führt zu einer Verlangsamung der Strömung nach außen hin.

Die **Fig. 4** zeigt in schematischer Darstellung ein erfindungsgemäßes Sedimentationsbecken 2. Das Becken 10 ist hier als Kreissektor oder Trapez gestaltet. Der Einlaufbereich 14 befindet sich an der Schmalseite 16, während der Ablaufbereich 15 mit dem Überlauf 18 und die Rinne 19 am gegenüberliegenden Rand 51 bzw. der breiteren Stirnwand 11a angeordnet sind. Der hier nicht gezeigte Schlammsammelraum 41 liegt bei dieser Bauform bevorzugt unterhalb des Einlaufbereichs 14. Die Strömungsleitwände 20 verlaufen im Wesentlichen in der hier radialen Hauptströmungsrichtung 21. Die Seitenwände 12 des Beckens 10 können glatt ausgebildet sein oder wie zuvor erläutert ist, dem Verlauf der Strömungsleitwände 20 angepasst sein.

Die **Fig. 5** zeigt einen schematischen Längsschnitt durch ein rechteckiges oder trapezförmiges Becken nach einer weiteren Variante der Erfindung. Bei dieser Bauform liegen die Strömungsleitwände 20 derart übereinander gestaffelt und quer zur Hauptströmungsrichtung 21, dass die Umlenkung der Strömung im Wesentlichen in vertikaler Richtung erfolgt. Das Sediment setzt sich hierbei bevorzugt in den als Querrinnen wirkenden Wellentälern ab und wird aus diesen durch Einwirkung der Schwerkraft seitwärts zu einer Seitenwand befördert. Hierfür ist eine ausreichende Neigung der Strömungsleitwände 20 in Richtung auf die Seitenwand hin erforderlich. Selbstverständlich können auch mehrere, z. B. zwei getrennte Anordnungen dieser Art Verwendung finden, etwa derart, dass die Neigung jeder Anordnung zur Mittellinie des Beckens 10 hin erfolgt. Bei dieser konstruktiven Variante sammelt sich das Sediment auf der Mittellinie des Beckenbodens, von wo aus es durch die Reinigungsvorrichtung in den Schlammsammelraum befördert wird.

Die **Fig. 6** zeigt einen schematischen Querschnitt durch ein trapezförmiges Becken nach **Fig. 4**. Die Kämme 24 der Wellen 22 oder Mäander 23 verlaufen hier in senkrechter Richtung, was durch die senkrechten Linien angedeutet ist. Der Abstand zwischen diesen Linien entspricht der Breite eines einzelnen Strömungskanals.

In **Fig. 7** ist ein schematischer Querschnitt durch ein rechteckiges oder trapezförmiges Becken 10 nach einer weiteren Ausführungsform der Erfindung gezeigt. Die Kämme 24 der Wellen 22 oder Mäander 23 verlaufen hier im Wesentlichen horizontal und parallel zur Hauptströmungsrichtung 21.

In einer weiteren Ausgestaltung der Erfindung ist es auch denkbar, die Gestaltung der Strömungsleitwände 20 nach den **Fig. 6** und **7** zu kombinieren, d.h. die Mäandrierung sowohl senkrecht als auch waagerecht verlaufen zu lassen. Hierdurch ergibt sich eine Profilierung der Strömungsleitwände 20 nach Art einer "Buckelpiste", wie sie Skifahrern geläufig ist. Diese Ausformung erlaubt vielfältige Variationen in der Anordnung und Dimensionierung der erfindungsgemäßen Strukturen der Strömungsleitwände 20. Die Grundidee liegt jedoch immer in einer erheblichen Reduzierung der Strömungsgeschwindigkeit des Abwassers 3 im Becken 10 durch die Formgebung der Strömungsleitwände 20.

### Bezugszeichenliste

- 1: Klärwerk/Kläranlage
- 2: Sedimentationsbecken
- 3: Abwasser
- 4: Fluid
- 5: Beimengungen
- 6: Auffangbecken
- 7: Rechen
- 8: Belebungsbecken
- 9: Nachklärbecken
- 10: Becken
- 11: Stirnwand
- 12: Seitenwand
- 13: Boden
- 14: Zulaufbereich
- 14a: Zulauf
- 15: Ablaufbereich
- 15a: Ablauf/
- 16: Schmalseite
- 17: Ecken
- 18: Überlauf
- 19: (Ablauf-) Rinne
- 20: Strömungsleitwände
- 21: Hauptströmungsrichtung
- 22: Welle
- 23: Mäander
- 24: Kamm
- 25: Oberkante
- 26: Erdoberfläche
- 27: Unterkante
- 30: Absetzbereich
- 31: Sediment
- 32: Prallhang
- 33: Gleithang
- 34: Stagnationsbereich
- 35: Reinigungsbereich

- 40: Teilbereich

- 41: Schlammsammelraum
- 42: (Reinigungs-)Vorrichtung/
- 43: Räumschilder
- 44: Ableitung
- 45: Öffnungen
- 46: Schlammabzug

## Patentansprüche

1. Sedimentationsbecken (2) für Kläranlagen (1) mit einem Becken (10), das einen Zulaufbereich (14) für das zu klärende Fluid (3), welches Fluid (3) mineralische und organische Beimengungen enthält, und einen Ablaufbereich (15) für das zumindest teilweise von Beimengungen befreite Fluid (3) aufweist, wobei sich in dem Becken (10) zwischen dem Zulaufbereich (14) und dem Ablaufbereich (15) eine horizontale Hauptströmungsrichtung (21) ausbildet, und flächige Einbauten parallel zur Hauptströmungsrichtung als strukturierte Strömungsleitwände (20) für das Fluid (3) in dem Becken (10) angeordnet sind, die Teilströme des Fluids (3) in kontinuierlich wechselnde Richtungen umlenken,
**dadurch gekennzeichnet,**
**dass** das Becken (10) trapezförmig ausgebildet ist, wobei der Zulaufbereich (14) auf der Schmalseite (16) des Trapezes, der Ablaufbereich (15) auf der gegenüberliegenden Seite angeordnet ist und die Strömungsleitwände (20) in Bezug auf die Schmalseite (16) divergierend verlaufen und der Boden (13) des Beckens (10) zumindest in einem Teilbereich (40) in Richtung auf den Ablaufbereich (15) hin ansteigt, wobei durch die trapezförmige Gestaltung des Beckens (10) der Einfluss des in Längsrichtung ansteigenden Bodens kompensiert wird.

2. Sedimentationsbecken (2) nach Anspruch 1, **dadurch gekennzeichnet, dass** die Strömungsleitwände (20) wellen-mäanderförmig strukturiert sind, wobei die Kämme (24) der Wellen (22) oder Mäander (23) senkrecht zur Erdoberfläche (26) und damit quer zur Hauptströmungsrichtung (21) zwischen Zulaufbereich (14) und Ablaufbereich (15) verlaufen.

3. Sedimentationsbecken (2) nach Anspruch 1 oder 2, **dadurch gekennzeichnet, dass** die Strömungsleitwände (20) von der Oberkante (25) des Beckens (10) bis annähernd zu dessen Boden (13) reichen.

4. Sedimentationsbecken (2) nach einem der Ansprüche 1 bis 3, **dadurch gekennzeichnet, dass** der Abstand zwischen dem Boden (13) des Beckens (10) und der Unterkante (27) der Strömungsleitwände (20) der Kontur des Bodens (13) folgend konstant ist.

5. Sedimentationsbecken (2) nach einem der Ansprüche 1 bis 4, **dadurch gekennzeichnet, dass** die Strömungsleitwände (20) in vertikaler Richtung verschiebbar ausgebildet sind.

6. Sedimentationsbecken (2) nach einem der Ansprüche 1 bis 5, **dadurch gekennzeichnet, dass** das Becken (10) mit einem Schlammsammelraum (41) ausgestattet ist, der den tiefsten Teilbereich (40) des Bodens (13) des Beckens (10) bildet.

7. Sedimentationsbecken (2) nach Anspruch 6, **dadurch gekennzeichnet, dass** mindestens eine Vorrichtung (42) vorhanden ist, um Sedimente (31) vom übrigen Boden (13) des Beckens (10) in den Schlammsammelraum (41) zu fördern.

8. Sedimentationsbecken (2) nach einem der Ansprüche 1 bis 7, **dadurch gekennzeichnet, dass** auch die sich zwischen dem Einlaufbereich (14) und dem Auslaufbereich (15) erstreckenden Seitenwände (12) des Beckens (10) eine der Form der Strömungsleitwände (20) entsprechende Form aufweisen.

9. Sedimentationsbecken (2) nach einem der Ansprüche 1 bis 8, **dadurch gekennzeichnet, dass** im Bereich des Bodens (13) und/oder der Stirnwände (11) oder der Seitenwände (12) des Beckens ein Gas oder eine Flüssigkeit (46) in das Becken (10) einleitbar ist.

10. Sedimentationsbecken (2) nach einem der voranstehenden Ansprüche, **dadurch gekennzeichnet, dass** die Strömungsleitwände (20) parallel zur Erdoberfläche (26) oder unter einem Winkel schräg hierzu verlaufend angeordnet sind.

11. Sedimentationsbecken (2) nach einem der voranstehenden Ansprüche, **dadurch gekennzeichnet, dass** Strömungsleitwände (20) verschiedener Länge in dem Becken (10) angeordnet sind.

12. Sedimentationsbecken (2) nach einem der voranstehenden Ansprüche, **dadurch gekennzeichnet, dass** die Strömungsleitwände (20) mit einer zusätzlichen Strukturierung ihrer Oberflächen versehen sind, deren jeweilige Dimensionen im Vergleich zu den Abständen der Wellen (22) oder der Mäander (23) wesentlich kleiner sind.

13. Sedimentationsbecken (2) nach einem der voranstehenden Ansprüche, **dadurch gekennzeichnet, dass** die Wellenlänge der wellen- oder mäanderförmigen Struktur der Strömungsleitwände (20) in der Hauptströmungsrichtung zu- oder abnimmt.

14. Sedimentationsbecken (2) nach einem oder mehreren der voranstehenden Ansprüche, **dadurch gekennzeichnet, dass** die Wellenlänge der wellen- oder mäanderförmigen Struktur der Strömungsleitwände (20) in der vertikalen Richtung von oben nach unten größer wird.

15. Sedimentationsbecken nach einem der voranstehenden Ansprüche, **dadurch gekennzeichnet, dass** die Strömungsleitwände (20) chemisch beschichtet sind und/oder dass sie mit elektrostatischen Aufladungen versehen sind und/oder dass sie auf unterschiedliche Temperaturen gebracht sind.

## Claims

1. Sedimentation tank (2) for sewage treatment plants (1), having a tank (10) with an inflow region (14) for the fluid (3) which is to be clarified, said fluid (3) containing mineral and organic additions, and with an outflow region (15) for the fluid (3) which has been freed, at least in part, of additions, wherein a horizontal main flow direction (21) forms in the tank (10), between the inflow region (14) and the outflow region (15), and sheet-like inserts are arranged in the tank (10), parallel to the main flow direction, as structured flow-directing walls (20) for the fluid (3), said inserts deflecting the sub-streams of fluid (3) in continuously alternating directions,
**characterized**
**in that** the tank (10) is of trapezoidal design, wherein the inflow region (14) is arranged on the narrow side (16) of the trapezium, the outflow region (15) is arranged on the opposite side, the flow-directing walls (20) diverge in relation to the narrow side (16) and the base (13) of the tank (10) slopes up, at least in a sub-region (40), in the direction of the outflow region (15), wherein the trapezoidal configuration of the tank (10) compensates for the influence of the longitudinally upwardly sloping base.

2. Sedimentation tank (2) according to Claim 1, **characterized in that** the flow-directing walls (20) are structured in wave/meander form, wherein the crests (24) of the waves (22) or meanders (23) run perpendicularly to the earth's surface (26) and thus transversely to the main flow direction (21) between the inflow region (14) and the outflow region (15).

3. Sedimentation tank (2) according to Claim 1 or 2, **characterized in that** the flow-directing walls (20) extend from the upper edge (25) of the tank (10) to more or less the base (13) thereof.

4. Sedimentation tank (2) according to one of Claims 1 to 3, **characterized in that** the distance between the base (13) of the tank (10) and the lower edge (27) of the flow-directing walls (20), following the contour of the base (13), is constant.

5. Sedimentation tank (2) according to one of Claims 1 to 4, **characterized in that** the flow-directing walls (20) are designed such that they can be displaced in the vertical direction.

6. Sedimentation tank (2) according to one of Claims 1 to 5, **characterized in that** the tank (10) is provided with a sludge-collecting chamber (41), which forms the lowermost sub-region (40) of the base (13) of the tank (10).

7. Sedimentation tank (2) according to Claim 6, **characterized by** the presence of at least one apparatus (42) for delivering sediments (31) from the rest of the base (13) of the tank (10) into the sludge-collecting chamber (41).

8. Sedimentation tank (2) according to one of Claims 1 to 7, **characterized in that** it is also the case that the side walls (12) of the tank (10), said side walls extending between the inlet region (14) and the outlet region (15), are in a form which corresponds to the form of the flow-directing walls (20).

9. Sedimentation tank (2) according to one of Claims 1 to 8, **characterized in that** a gas or a liquid (46) can be introduced into the tank (10) in the region of the base (13) and/or of the end walls (11) or of the side walls (12) of the tank.

10. Sedimentation tank (2) according to one of the preceding claims, **characterized in that** the flow-directing walls (20) are arranged to run parallel to the earth's surface (26) or obliquely at an angle thereto.

11. Sedimentation tank (2) according to one of the preceding claims, **characterized in that** flow-directing walls (20) of different lengths are arranged in the tank (10).

12. Sedimentation tank (2) according to one of the preceding claims, **characterized in that** the flow-directing walls (20) are provided with additional surface structuring, the respective dimensions of which are considerably smaller than the distances between the waves (22) or the meanders (23).

13. Sedimentation tank (2) according to one of the preceding claims, **characterized in that** the wavelength of the wave-form or meander-form structure of the flow-directing walls (20) increases or decreases in the main flow direction.

14. Sedimentation tank (2) according to one or more of the preceding claims, **characterized in that** the wavelength of the wave-form or meander-form structure of the flow-directing walls (20) increases vertically from top to bottom.

15. Sedimentation tank according to one of the preceding claims, **characterized in that** the flow-directing walls (20) are coated chemically and/or **in that** they are provided with electrostatic charges, and/or **in that** they are brought to different temperatures.

## Revendications

1. Bassin de sédimentation (2) pour stations d'épuration (1), comprenant un bassin (10) qui présente une région d'alimentation (14) pour le fluide à épurer (3), lequel fluide (3) contient des substances minérales et organiques mélangées, et une région d'écoulement (15) pour le fluide (3) au moins partiellement débarrassé des substances mélangées, une direction horizontale d'écoulement principal (21) se créant dans le bassin (10) entre la région d'alimentation (14) et la région d'écoulement (15) et des éléments encastrés plats étant disposés dans le bassin (10) parallèlement à la direction d'écoulement principal sous forme de parois structurées conductrices de l'écoulement (20) pour le fluide (3), lesquels dévient des écoulements partiels du fluide (3) dans des directions alternant en continu,
**caractérisé en ce que**
le bassin (10) est réalisé sous forme trapézoïdale, la région d'alimentation (14) étant disposée du côté étroit (16) du trapèze, la région d'écoulement (15) étant disposée du côté opposé et les parois conductrices de l'écoulement (20) s'étendant en divergeant par rapport au côté étroit (16) et le fond (13) du bassin (10), au moins dans une région partielle (40), montant dans la direction de la région d'écoulement (15), l'influence du fond montant dans la direction longitudinale étant compensée par la configuration trapézoïdale du bassin (10).

2. Bassin de sédimentation (2) selon la revendication 1, **caractérisé en ce que** les parois conductrices de l'écoulement (20) sont structurées en forme de méandres ondulés, les crêtes (24) des ondulations (22) ou des méandres (23) s'étendant perpendiculairement à la surface du sol (26) et donc transversalement à la direction d'écoulement principal (21) entre la région d'alimentation (14) et la région d'écoulement (15).

3. Bassin de sédimentation (2) selon la revendication 1 ou 2, **caractérisé en ce que** les parois conductrices de l'écoulement (20) s'étendent depuis le bord supérieur (25) du bassin (10) presque jusque dans son fond (13).

4. Bassin de sédimentation (2) selon l'une quelconque des revendications 1 à 3, **caractérisé en ce que** la distance entre le fond (13) du bassin (10) et le bord inférieur (27) des parois conductrices de l'écoulement (20), en suivant le contour du fond (13), est constante.

5. Bassin de sédimentation (2) selon l'une quelconque des revendications 1 à 4, **caractérisé en ce que** les parois conductrices de l'écoulement (20) sont réalisées de manière déplaçable dans la direction verticale.

6. Bassin de sédimentation (2) selon l'une quelconque des revendications 1 à 5, **caractérisé en ce que** le bassin (10) est muni d'un espace de collecte des boues (41) qui forme la région partielle la plus profonde (40) du fond (13) du bassin (10).

7. Bassin de sédimentation (2) selon la revendication 6, **caractérisé en ce qu'**au moins un dispositif (42) est prévu pour transporter les sédiments (31) depuis le reste du fond (13) du bassin (10) jusque dans l'espace de collecte des boues (41).

8. Bassin de sédimentation (2) selon l'une quelconque des revendications 1 à 7, **caractérisé en ce que** les parois latérales (12) du bassin (10) s'étendant entre la région d'alimentation (14) et la région d'écoulement (15) présentent aussi une forme correspondant à la forme des parois conductrices de l'écoulement (20).

9. Bassin de sédimentation (2) selon l'une quelconque des revendications 1 à 8, **caractérisé en ce que** dans la région du fond (13) et/ou des parois frontales (11) ou des parois latérales (12) du bassin, un gaz ou un liquide (46) peut être introduit dans le bassin (10).

10. Bassin de sédimentation (2) selon l'une quelconque des revendications précédentes, **caractérisé en ce que** les parois conductrices de l'écoulement (20) sont disposées de manière à s'étendre parallèlement à la surface du sol (26) ou obliquement suivant un certain angle par rapport à celle-ci.

11. Bassin de sédimentation (2) selon l'une quelconque des revendications précédentes, **caractérisé en ce que** des parois conductrices de l'écoulement (20) de différentes longueurs sont disposées dans le bassin (10).

12. Bassin de sédimentation (2) selon l'une quelconque des revendications précédentes, **caractérisé en ce que** les parois conductrices de l'écoulement (20) sont pourvues d'une structuration supplémentaire de leurs surfaces, dont les dimensions respectives sont essentiellement plus petites par comparaison aux distances des ondulations (22) ou des méandres (23).

13. Bassin de sédimentation (2) selon l'une quelconque des revendications précédentes, **caractérisé en ce que** la longueur des ondulations de la structure de forme ondulée ou en forme de méandres des parois conductrices de l'écoulement (20) augmente ou diminue dans la direction d'écoulement principal.

14. Bassin de sédimentation (2) selon l'une quelconque ou plusieurs des revendications précédentes, **caractérisé en ce que** la longueur des ondulations de la structure de forme ondulée ou en forme de méandres des parois conductrices de l'écoulement (20) augmente de haut en bas dans la direction verticale.

15. Bassin de sédimentation selon l'une quelconque des revendications précédentes, **caractérisé en ce que** les parois conductrices de l'écoulement (20) sont pourvues d'un revêtement chimique et/ou **en ce qu'**elles sont pourvues de charges électrostatiques et/ou **en ce qu'**elles sont amenées à différentes températures.
